# EUROPEAN PATENT SPECIFICATION

(11) **EP 4 138 261 B1**
(45) Date of publication and mention of the grant of the patent: **29.01.2025**
(21) Application number: 22190771.0
(22) Date of filing: 17.08.2022
(51) Int. Cl.: H02J 7/00, H02J 7/35, H02J 7/34, H02J 7/02, B60L 53/67, B60L 53/14, B60L 53/31, B60L 53/51, B60L 53/62, B60L 53/63

(54) **CHARGING METHOD, CHARGING APPARATUS, AND CHARGING SYSTEM**
LADEVERFAHREN, LADEGERÄT UND LADESYSTEM
PROCÉDÉ DE CHARGEMENT, APPAREIL DE CHARGEMENT ET SYSTÈME DE CHARGEMENT

(30) Priority: 17.08.2021 CN 202110944977
(43) Date of publication of application: 22.02.2023
(73) Proprietor: Huawei Digital Power Technologies Co., Ltd., Shenzhen, 518043 (CN)
(72) Inventor: LONG, Xi, Shenzhen 518129 (CN); LIN, Quanxi, Shenzhen 518129 (CN); WANG, Yichang, Shenzhen 518129 (CN); REN, Zhanlin, Shenzhen 518129 (CN)
(74) Representative: Gill Jennings & Every LLP

(56) References cited:
- EP-A1- 3 984 808
- CN-A- 104 810 894
- CN-A- 112 224 081
- CN-A- 112 918 288
- US-A1- 2019 217 734

## Description

### TECHNICAL FIELD

This application relates to the field of charging technologies, and in particular, to a charging method, a charging apparatus, and a charging system.

### BACKGROUND

With development of new energy technologies, technologies related to electric vehicles are gradually becoming mature. As a service infrastructure matching the electric vehicle, a charging station can quickly, efficiently, economically, and safely provide electric energy required for running various electric vehicles. In a current charging station, a charging module in a charging pile corresponds to a fixed parking space or is shared by a limited quantity of parking spaces, and inflexibly responds to a charging power requirement of a nearby parking space. Therefore, a scheduling range of the charging module is limited, and a problem of insufficient utilization exists.

Therefore, how to overcome the disadvantage of insufficient utilization of the charging module and improve charging experience is a problem that urgently needs to be resolved.

CN104810894A relates to split type direct-current charging piles for electric automobiles, system and method. CN112918288A relates to integrated charging module, charging pile and control method thereof. CN112224081A relates to multi-gun charging pile and charging pile circuit. US2019217734A1 relates to charging pile.

### SUMMARY

This application provides a charging method, a charging apparatus, and a charging system, to expand a charging scheduling range, improve utilization of a charging apparatus, and improve charging experience.

The invention has been defined in the independent claims. Further specific technical features have been defined in the dependent claims.

According to a first aspect, a charging system according to claim 1 is provided.

In the charging system provided in this solution, a plurality of charging apparatuses are connected to share an electric energy reserve, so that utilization of the electric energy reserve in the charging apparatus can be improved, a charging requirement can be met in a timely manner, and charging experience can be improved.

According to a second aspect, a charging method according to claim 5 is provided.

It should be understood that explanations, supplements, and beneficial effects of the first aspect are also applicable to the second aspect , and details are not described herein again.

According to a third aspect, a control apparatus according to claim 9 is provided.

According to a fourth aspect, a computer-readable storage medium according to claim 10 is provided.

### BRIEF DESCRIPTION OF DRAWINGS

FIG. 1 is a schematic diagram of a charging system;
FIG. 2 is a schematic diagram of another charging system;
FIG. 3 is a schematic diagram of an example charging apparatus applicable to implementations of this application;
FIG. 4 is a schematic diagram of an example charging system applicable to implementations of this application;
(a) in FIG. 5 is a schematic diagram of a connection relationship between charging apparatuses applicable to implementations of this application;

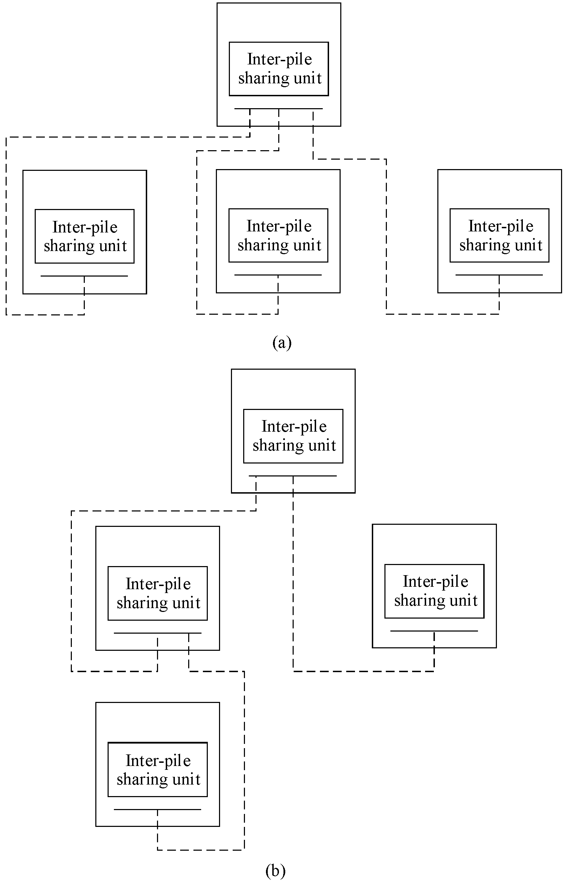

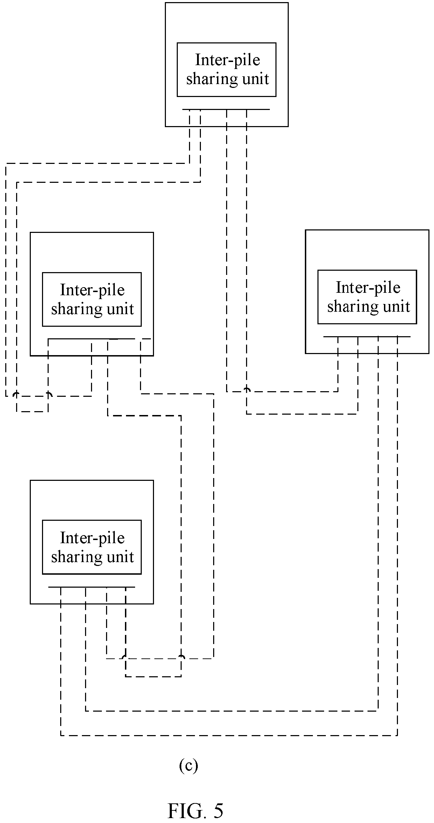

(b) in FIG. 5 is a schematic diagram of a connection relationship between charging apparatuses applicable to implementations of this application;
(c) in FIG. 5 is a schematic diagram of a connection relationship between charging apparatuses applicable to implementations of this application;

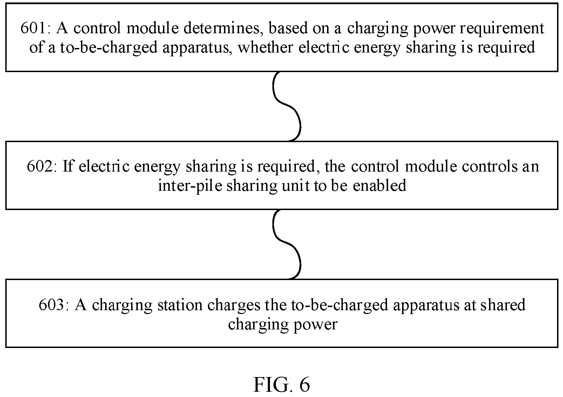

FIG. 6 is a schematic flowchart of a charging method applicable to implementations of this application;

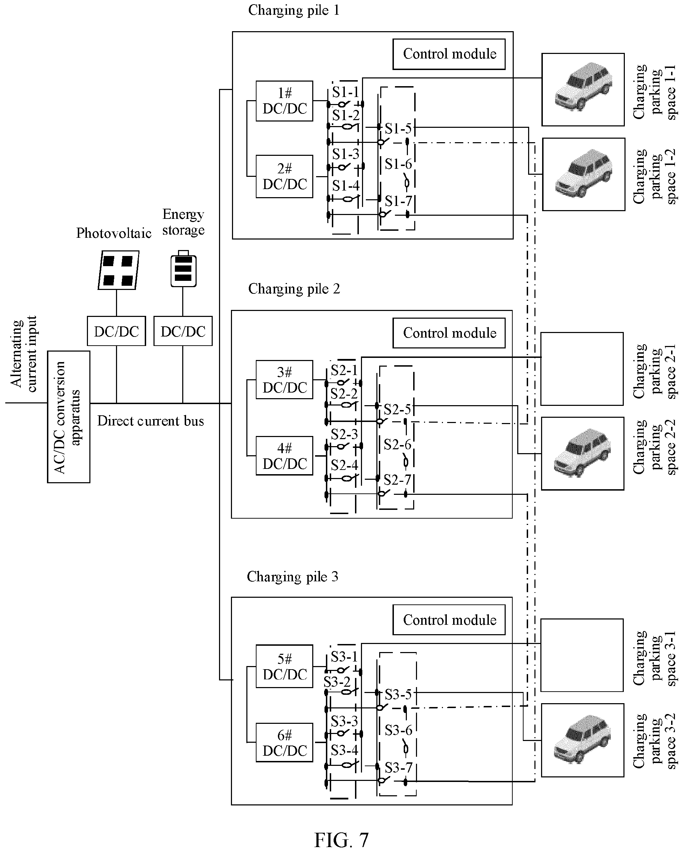

FIG. 7 is a schematic diagram of a charging method applicable to implementations of this application;

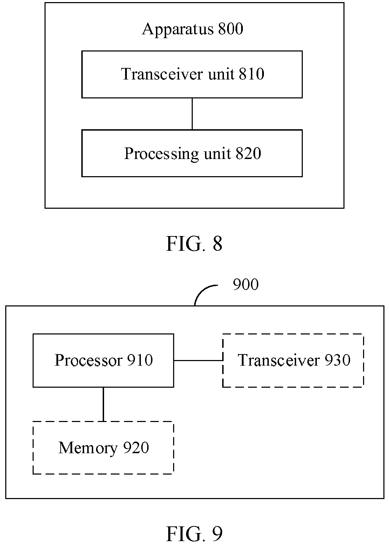

FIG. 8 is a schematic block diagram of a control apparatus applicable to implementations of this application; and
FIG. 9 is a schematic block diagram of a control apparatus applicable to implementations of this application.

### DESCRIPTION OF IMPLEMENTATIONS

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those that comprise at least all the features of an independent claim. Any implementation that does not fall within the scope of the claims does not form part of the invention, but rather included as an illustrative example that is useful for understanding the invention.

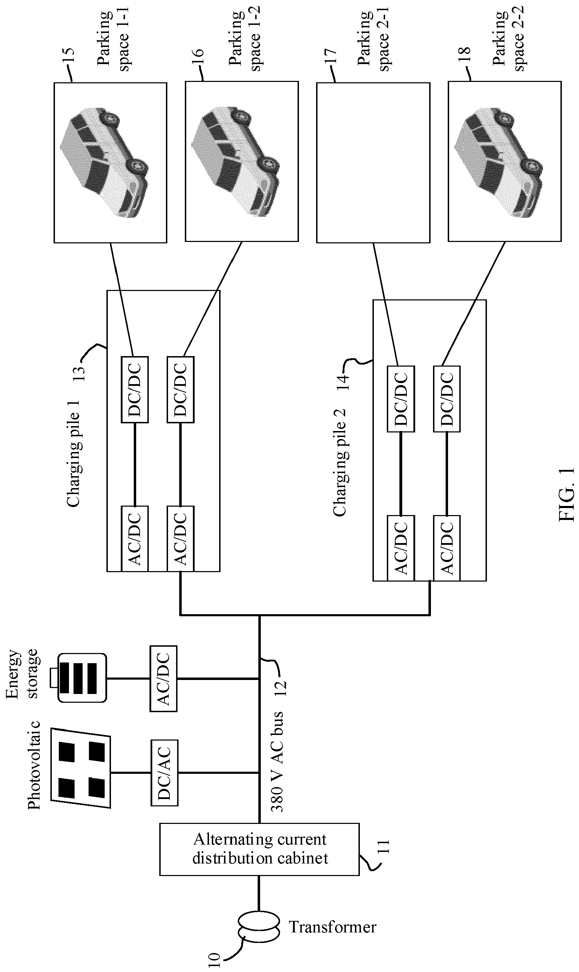

FIG. 1 is a schematic diagram of a conventional charging system. As shown in FIG. 1, a conventional charging system 100 includes a transformer 10, an alternating current distribution cabinet 11, an alternating current bus 12, a charging pile A (13), a charging pile B (14), and to-be-charged apparatuses 15 to 18. The to-be-charged apparatus may be an electric vehicle. A power supply and distribution system of a medium-and-large electric vehicle charging station usually starts from obtaining electric energy from a medium-voltage power grid. The transformer 10 transforms the electric energy into a low-voltage alternating current, and then the low-voltage alternating current converges into the alternating current distribution cabinet 11 for electric energy distribution. The alternating current enters an input side of the charging piles (13 and 14) in the station from the distribution cabinet. In the charging pile, a power conversion unit integrating alternating current to direct current (alternating current to direct current, AC/DC) and direct current to direct current (direct current to direct current, DC/DC) converts, for charging a battery, electric energy into a direct current required by an electric vehicle. Electric energy may be provided by photovoltaic power or an energy storage battery. Both the photovoltaic power and the energy storage battery are direct current power supplies. The electric energy needs to be converted into an alternating current by using a DC/AC converter, and then transferred to the battery of the electric vehicle through AC/DC conversion and DC/DC conversion. A charging module in the charging pile corresponds to a fixed parking space or is shared by a limited quantity of parking spaces, and inflexibly responds to a charging power requirement of a nearby parking space. For example, when parking spaces 1-1 and 1-2 require high charging power, and parking spaces 2-1 and 2-2 require low charging power, a module of a charging pile 2 cannot be used for a corresponding parking space of a charging pile 1 through cross-pile sharing, causing insufficient utilization of the charging module.

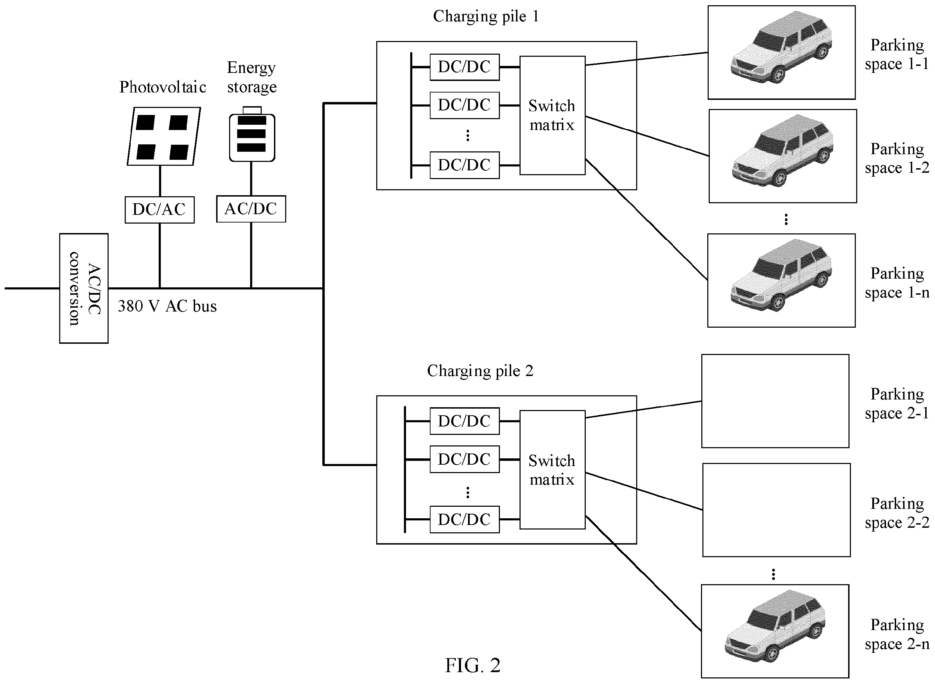

FIG. 2 is a schematic diagram of an example direct current charging apparatus. Electricity of an alternating current power grid passes through an alternating current to direct current conversion unit to form a direct current, and electric energy is distributed to an integrated pile of direct current input by using a direct current bus. DC/DC charging modules connected in parallel exist in the direct current pile, and the module can charge an electric vehicle connected to a gun head. In this system, the DC/DC module can be scheduled, within the pile by using a switch matrix, for a charged terminal connected to the charging pile, to implement an increase or a reduction in charging power of the charged terminal. However, the charging pile system with the direct current bus architecture and the switch matrix within the pile cannot schedule power of the DC/DC module from one pile to a charged terminal on another pile, and can perform scheduling only within the pile. Therefore, a scheduling range is limited. In this solution, the scheduling range of the charging module can be expanded by increasing a quantity of charged terminals in one pile. However, in this case, a volume and rated power of a single pile are quite large, and networking and expansion cannot be flexibly implemented based on a deployment status of the charging pile.

In some current charging site systems, except for mains, main power supplies and loads, for example, energy storage batteries, a photovoltaic panel, and wind power, provide electric energy in the form of a direct current, and the electric energy is converged and distributed in the form of an alternating current, causing excessive alternating current-direct current conversion. This reduces efficiency and increases costs. In addition, there are various types of vehicles in a common charging site, and charging power requirements of charging guns in different time periods are different. Due to a fixed connection between a charging module and a charging gun, low utilization is caused in a case of over-provisioning of charging modules, or charging experience is reduced in a case of under-provisioning of charging modules.

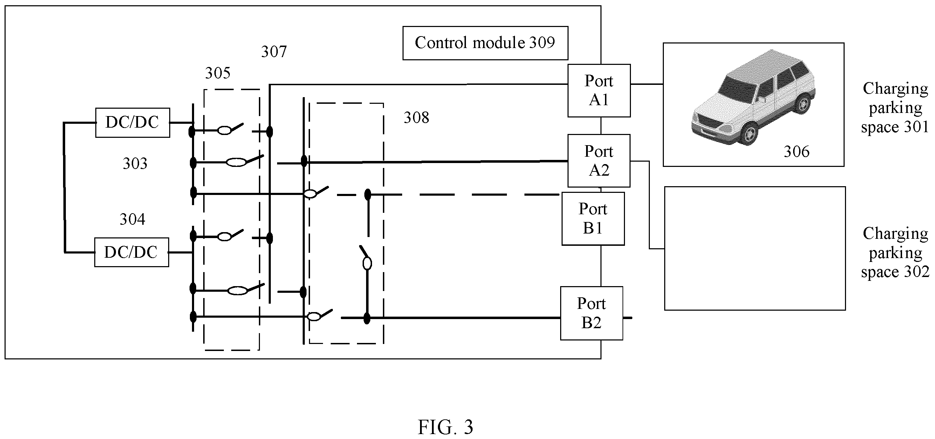

To resolve the foregoing problem, this application provides a charging apparatus. As shown in FIG. 3, the charging apparatus corresponds to fixed charging parking spaces 301 and 302, and the charging apparatus may include a plurality of charging modules 303 and 304, and may include an intra-pile sharing unit 305.

The charging module may transfer photovoltaic power or power of an energy storage battery to a to-be-charged apparatus 306, and the charging module may be a DC/DC. The charging module may be connected to the to-be-charged apparatus 306 by using a bus 307.

The intra-pile sharing unit is configured to share an electric energy reserve inside the charging apparatus. The intra-pile sharing unit may include a plurality of switches (also referred to as switch modules), and the plurality of switches correspond to the charging modules, and are configured to control connections between the corresponding charging modules and the bus to be enabled or disabled.

Optionally, the charging apparatus may further include an inter-pile sharing unit 308, configured to share an electric energy reserve between a plurality of charging apparatuses, and the intra-pile sharing unit may include a plurality of switches (also referred to as switch modules), configured to enable or disable a connection between different charging apparatuses.

The charging apparatus may further include a control module 309. The control module is configured to control the intra-pile sharing unit and/or the inter-pile sharing unit to be used or disabled. Further, the control module may be configured to control the switches in the intra-pile sharing unit and/or the switches in the inter-pile sharing unit to be opened or closed.

It should be further understood that the charging apparatus may be connected to a to-be-charged apparatus by using a port, for example, a port shown in FIG. 3. The charging apparatus may be connected to the charging parking space 301 by using a port A1, the charging apparatus may be connected to the charging parking space 302 by using a port A2, and inter-pile sharing units of different charging piles may be connected by using ports B1 and B2. The ports are merely used as examples but do not constitute a limitation, and a quantity of ports of the charging apparatus is not limited in this application.

A function of the port may also be flexibly configured. For example, the ports A1 and A2 may be alternatively configured to connect the charging apparatus to another charging apparatus, and the ports B1 and B2 may be alternatively configured to connect the charging apparatus to a charging parking space. A function or a purpose of each port is not limited in this application.

In the charging apparatus, the intra-pile sharing unit is configured, so that electric energy inside a charging apparatus can be flexibly scheduled to meet charging requirements of different to-be-charged apparatuses. In addition, the inter-pile sharing unit may be further configured, and a connection interface between different charging apparatuses may be provided, so that electric energy between different charging apparatuses can be flexibly scheduled to meet a high-power charging requirement, improve utilization of the charging apparatus, and improve charging efficiency.

The following uses an example in which the charging apparatus is a charging pile and the to-be-charged apparatus is an electric vehicle to describe the solutions of this application.

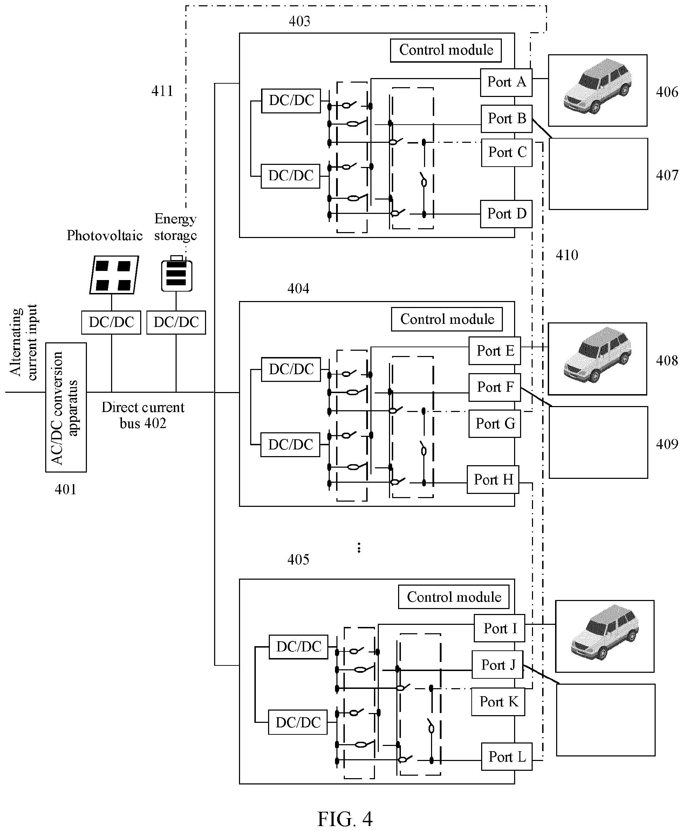

An implementation of this application provides a charging station. As shown in FIG. 4, the charging station may include a plurality of charging piles. The charging pile is similar to the foregoing charging apparatus, and details are not described herein again.

The charging station may include a two-way AC/DC converter 401, configured to connect alternating current input and a direct current bus 402. A plurality of charging piles 403 to 405 are connected to the direct current bus 402. The charging piles are connected to to-be-charged electric vehicles 406 to 409 on charging parking spaces.

It should be understood that the alternating current input in FIG. 4 may be alternatively directly connected to a charging apparatus. In this case, an AC/DC module is configured inside the charging apparatus, and the AC/DC module may convert the alternating current input into a direct current, to charge the to-be-charged electric vehicle.

It should be understood that the charging pile and the electric vehicle may be connected by using a charging gun, and a port configured to connect to the charging gun is configured in the charging pile.

The charging station may further include a control module 406, configured to control, based on a charging requirement of the to-be-charged electric vehicle, an intra-pile sharing unit and/or an inter-pile sharing unit to be enabled or disabled, in other words, control switches to be closed or opened.

It should be understood that different charging piles may be connected. For example, the charging pile 403 and the charging pile 405 may be connected by using a direct current cable 410.

A port configured to connect to the cable is configured in the charging pile. For example, a port A in the charging pile 403 is configured to connect the charging pile to the parking space 406, a port B is configured to connect the charging pile to the parking space 407, a port C is configured to connect an inter-pile sharing unit of the charging pile 403 to an inter-pile sharing unit of the charging pile 404, and a port D is configured to connect the inter-pile sharing unit of the charging pile 403 to an inter-pile sharing unit of the charging pile 405. A port E in the charging pile 404 is configured to connect the charging pile to the parking space 408. The ports A, B, C, and D are connected by using internal connection lines, and ports E, F, G, and H are connected by using internal connection lines. Similarly, corresponding ports are also configured in the charging pile 405.

In the charging station, a photovoltaic panel, an energy storage battery, the charging pile, and the like may be connected to the direct current bus through level-1 DC/DC power conversion, to implement efficient photovoltaic-energy storage conversion and storage system to charging station conversion. In addition, the charging module of the charging pile can implement power sharing between piles to meet different charging power requirements on parking spaces.

It should be understood that the port configured in the charging apparatus may be further configured to connect to an energy storage module. For example, as shown in FIG. 4, an energy storage module in the figure may be a photovoltaic component or may be an energy storage component. The energy storage module is directly connected to the port A by using a link 411, and the port A is further connected to the charging apparatus 406. Electric energy in the energy storage module can be directly provided for the charging apparatus for use. This is not limited in this application.

It should be understood that there may be a plurality of networking manners of sharing units of a plurality of charging piles. For example, a topology structure such as a chain shape shown in (a) in FIG. 5, a star shape shown in (b) in FIG. 5, or a dual-ring shape shown in (c) in FIG. 5 may be used. Different topology structures can provide different inter-pile sharing control policies and sharing flexibility, and the inter-pile sharing control policies and sharing flexibility may be flexibly selected based on an actual requirement.

Another implementation of this application provides a charging method, applied to the foregoing charging station, as shown in FIG. 6.

601. A control module determines, based on a charging power requirement of a to-be-charged apparatus, whether electric energy sharing is required.

602. If electric energy sharing is required, the control module controls an inter-pile sharing unit to be enabled.

603. A charging station charges the to-be-charged apparatus at shared charging power.

In the method, electric energy reserves of different charging apparatuses in the charging station are shared, so that different requirements of the to-be-charged apparatus can be met, thereby improving charging efficiency.

It should be understood that to determine, based on a requirement, whether sharing is required, the control module may perform the determining based on target charging power and real-time charging power of a charging pile, where for example, sharing is enabled when the real-time charging power of the charging pile cannot meet a charging power requirement of an electric vehicle; or may perform the determining based on target charging power and a power threshold of a charging pile, where for example, when the target charging power is greater than the threshold of the charging pile, the control module determines that sharing needs to be enabled.

It should be further understood that when determining to enable sharing, the control module further needs to determine, based on a position of the to-be-charged apparatus and a real-time charging status of each charging apparatus, to close a corresponding switch to enable a connection.

For example, as shown in FIG. 7, an electric vehicle on a charging parking space 1-1 needs to be charged.

The charging parking space is correspondingly connected to a charging pile 1. Charging power of the charging pile 1 is less than charging power required by the electric vehicle, and the control module determines that sharing needs to be enabled. Then the control module determines, based on a position of the parking space and a charging status of each charging pile, a switch that needs to be closed.

For example, if real-time charging power of the charging pile 1 and a charging pile 2 cannot meet a charging power requirement of the electric vehicle, both the charging pile 2 and a charging pile 3 need to be shared.

S3-5 and S3-6 in the charging pile 3 are closed, so that a link 3 is enabled, and electric energy of the charging pile 3 is shared with the charging pile 1.

S2-5 in the charging pile 2 and S1-5 and S1-1 in the charging pile 1 are closed, so that a link 2 is enabled, and electric energy of the charging pile 2 is shared with the charging pile 1.

S1-1 in the charging pile 1 is closed, so that a link is enabled.

In addition, S3-1 and S3-7 in the charging pile 3, S2-1 and S2-6 in the charging pile 2, and S1-7 and S1-2 in the charging pile 1 are opened. In this way, a 3# module of the charging pile 2 and a 5# module of the charging pile 3 can charge the charging parking space 1-1 together with a 1# module of the charging pile 1 by using the three links.

It should be understood that the control module may be configured in each charging pile to obtain a charging status of another charging pile through real-time communication, or a main control module may be configured in the charging station. This is not limited in this application.

It should be further understood that ports in the charging pile are not shown in FIG. 7. The ports are similar to the foregoing ports, and therefore details are not described herein again.

It should be understood that the inter-pile sharing unit may also be flexibly configured as required. DC/DC modules in other piles are combined by using the inter-pile sharing unit, to implement fast charging of some super-high-power to-be-charged vehicles, thereby greatly improving output power of a single pile.

It should be further understood that in addition to being applied to an electric vehicle charging site, this application may be applied to other charging fields, for example, an electric vehicle swap station that simultaneously charges a plurality of batteries.

Implementations described in this specification may be independent solutions, or may be combined according to internal logic. These solutions fall within the protection scope of this application.

In the foregoing implementations provided in this application, the method provided in implementations of this application is separately described from the perspective of interaction between devices. To implement functions in the foregoing method provided in implementations of this application, a network device or a terminal device may include a hardware structure and/or a software module, to implement the foregoing functions in a form of a hardware structure, a software module, or a hardware structure and a software module. Whether one of the foregoing functions is performed in a manner of a hardware structure, a software module, or a hardware structure and a software module depends on a specific application and design constraints of technical solutions.

In this implementation of this application, module division is an example, and is merely a logical function division. In an actual implementation, another division manner may be used. In addition, functional modules in this application may be integrated into one processor, or each of the modules may exist alone physically, or two or more modules may be integrated into one module. The integrated module may be implemented in a form of hardware, or may be implemented in a form of a software functional module.

Similar to the foregoing concept, as shown in FIG. 8, an implementation of this application further provides an apparatus 800, configured to implement functions of the control module in the foregoing method. For example, the apparatus may be a software module or a chip system. In this implementation of this application, the chip system may include a chip, or may include a chip and another discrete component. The apparatus 800 may include a processing unit 810 and a communications unit 820.

In this implementation of this application, the communications unit may also be referred to as a transceiver unit, and the transceiver unit may include a sending unit and/or a receiving unit, respectively configured to perform sending and receiving steps of the control module in the foregoing method implementation.

The following describes in detail the control apparatus provided in implementations of this application with reference to FIG. 8 and FIG. 9. It should be understood that descriptions of the apparatus implementations correspond to the descriptions of the method implementation, and therefore, for content that is not described in detail, refer to the foregoing method implementation. For simplicity, details are not described herein again.

The communications unit may also be referred to as a transceiver, a transceiver apparatus, or the like. The processing unit may also be referred to as a processor, a processing board, a processing module, a processing apparatus, or the like. Optionally, a component that is in the communications unit 820 and that is configured to implement a receiving function may be considered as a receiving unit, and a component that is in the communications unit 820 and that is configured to implement a sending function may be considered as a sending unit, in other words, the communications unit 820 includes a receiving unit and a sending unit. The communications unit sometimes may also be referred to as a transceiver, an interface circuit, or the like. The receiving unit sometimes may also be referred to as a receiver machine, a receiver, a receiver circuit, or the like. The sending unit may also be sometimes referred to as a transmitter machine, a transmitter, a transmit circuit, or the like.

When the communications apparatus 800 performs functions of the control module shown in any one of FIG. 3 to FIG. 7 in the foregoing implementations,
the processing unit is configured to determine, based on real-time charging power of a charging apparatus and target charging power of a to-be-charged apparatus, whether to enable a sharing link; and
the communications unit is configured to transmit/receive information.

The foregoing is merely an example. The processing unit 810 and the communications unit 820 may further perform other functions. For more detailed descriptions, refer to related descriptions in the implementations shown in FIG. 3 to FIG. 7 or other implementations. Details are not described herein again.

FIG. 9 shows an apparatus 900 according to an implementation of this application. The apparatus shown in FIG. 9 may be an implementation of a hardware circuit of the apparatus shown in FIG. 8. The control apparatus may perform functions of the control module in the foregoing method implementation. For ease of description, FIG. 9 shows only main components of the control apparatus.

As shown in FIG. 9, the communications apparatus 900 includes a processor 910 and an interface circuit 920. The processor 910 is coupled to the interface circuit 920. It may be understood that the interface circuit 920 may be a transceiver or an input/output interface. Optionally, the communications apparatus 900 may further include a memory 930, configured to store instructions to be executed by the processor 910, store input data required by the processor 910 to run instructions, or store data generated after the processor 910 runs instructions.

When the communications apparatus 900 is configured to implement the solutions shown in FIG. 3 to FIG. 7, the processor 910 is configured to implement functions of the processing unit 810, and the interface circuit 920 is configured to implement functions of the communications unit 820.

It may be understood that, the processor in implementations of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

The processor in implementations of this application may be a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk, a removable hard disk, a CD-ROM, or a storage medium in any other form well-known in the art. For example, a storage medium is coupled to a processor, so that the processor can read information from the storage medium or write information into the storage medium. Certainly, the storage medium may be a component of the processor. The processor and the storage medium may be disposed in an ASIC. In addition, the ASIC may be located in a network device or a terminal device. Certainly, the processor and the storage medium may exist in the network device or the terminal device as discrete components.

A person skilled in the art should understand that the implementations of this application may be provided as a method, a system, or a computer program product. Therefore, this application may use a form of hardware only implementations, software only implementations, or implementations with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The scope of protection is defined by the appended claims.

## Claims

1. A charging system, wherein the charging system comprises at least a first charging apparatus (403) and multiple second charging apparatus (404, 405), wherein
the first charging apparatus comprises: at least a first output port and at least two second output ports, and each second charging apparatus comprises at least a third output port and a fourth output port,
wherein the first output port is connectable to a first to-be-charged apparatus located in a first charging parking space corresponding to the first charging apparatus, the third output port is connectable to the fourth output port of at least two second charging apparatus, and the fourth port is connectable to a second to-be-charged apparatus located in a second charging parking space corresponding to the respective second charging apparatus, and wherein the at least two second output ports are connectable to the third output ports of at least two second charging apparatus in a one-to-one correspondence manner via a respective first link,
wherein the first charging apparatus further comprises a first control module and each second charging apparatus comprises a second control module,
wherein the second control module configured to send first indication information, and the first indication information is configured to indicate real-time charging power of the second charging apparatus; and
the first control module is further configured to receive the first indication information;
wherein the first control module is further configured to:
determine whether to enable the first link based on a charging power requirement of the first to-be-charged apparatus and a charging power of the first charging apparatus, wherein when the first link is enabled, the first charging apparatus is configured to charge the first to-be-charged apparatus at a first shared charging power, and the first shared charging power comprises real-time charging power of the first charging apparatus and the corresponding second charging apparatus;
select one or more of the multiple second charging apparatus based on the real-time charging power of the second charging apparatus; and
enable the first link corresponding to each selected second charging apparatus.

2. The charging system according to claim 1, wherein
the first control module is specifically configured to: when the charging power requirement of the first to-be-charged apparatus is greater than real-time charging power of the first charging apparatus, determine to enable the first link; or
when the charging power requirement of the first to-be-charged apparatus is greater than a charging power threshold of the first charging apparatus, determine to enable the first link.

3. The charging system according to claim 1 or 2, wherein each second charging apparatus comprises a second charging module and each second control module is configured to select a corresponding first sub-link based on the real-time charging power of the second charging apparatus, the first sub-link comprises a connection between the second charging module and the third port.

4. The charging system according to any one of claims 1 to 3, wherein the first charging apparatus comprises a first switch module and the second charging apparatus comprises a second switch module, and the first control module is specifically configured to control the first switch module to enable or disable a connection, and the second control module is specifically configured to control the second switch module to enable or disable a connection.

5. A charging method, wherein the charging method is performed by a charging system according to any one of claims 1 to 4 and the method comprises:
sending, by each second control module, the first indication information, wherein the first indication information is configured to indicate the real-time charging power of the corresponding second charging apparatus; and
receiving, by the first control module, the first indication information;
wherein the method further comprises:
determining whether to enable the first link based on a charging power requirement of the first to-be-charged apparatus and a charging power of the first charging apparatus, wherein when the first link is enabled, the first to-be-charged apparatus is charged at a first shared charging power, and the first shared charging power comprises real-time charging power of the first charging apparatus and the corresponding second charging apparatus;
selecting one or more of the multiple second charging apparatus based on the real-time charging power of the second charging apparatus; and
enabling the first link corresponding to each selected second charging apparatus.

6. The method according to claim 5, wherein the determining, by the first control module based on the charging power requirement of the first to-be-charged apparatus and the charging power of the first charging apparatus, to enable the first link comprises:
when the charging power requirement of the first to-be-charged apparatus is greater than real-time charging power of the first charging apparatus, determining to enable the first link; or
when the charging power requirement of the first to-be-charged apparatus is greater than a charging power threshold of the first charging apparatus, determining to enable the first link.

7. The method according to claim 6, wherein each second charging apparatus comprises a second charging module and the method further comprises: selecting, by the second control module, a corresponding first sub-link based on the real-time charging power of the second charging apparatus, the first sub-link comprises a connection between the second charging module and the third port.

8. The method according to any one of claims 5 to 7, wherein the first charging apparatus comprises a first switch module and the second charging apparatus comprises a second switch module, and method comprises:
controlling, by the first control module, the first switch module to enable or disable a connection, and controlling, by the second control module, the second switch module to enable or disable a connection.

9. A control apparatus for use in a charging system according to any one of claims 1 to 4, comprising a processor and a memory, wherein when a set of instructions stored in the memory are executed by the processor, the control apparatus is enabled to perform the corresponding steps according to any one of claims 5 to 8.

10. A computer-readable storage medium, comprising instructions, which when executed by a control apparatus according to claim 9 cause the control apparatus to perform the method according to any one of claims 5 to 8.

## Patentansprüche

1. Ladesystem, wobei das Ladesystem mindestens eine erste Ladevorrichtung (403) und mehrere zweite Ladevorrichtungen (404, 405) umfasst, wobei die erste Ladevorrichtung Folgendes umfasst: mindestens einen ersten Ausgangsanschluss und mindestens zwei zweite Ausgangsanschlüsse, und wobei jede zweite Ladevorrichtung mindestens einen dritten Ausgangsanschluss und einen vierten Ausgangsanschluss umfasst,
wobei der erste Ausgangsanschluss mit einer ersten zu ladenden Vorrichtung verbindbar ist, die sich in einem ersten Ladeparkplatz befindet, der der ersten Ladevorrichtung entspricht, der dritte Ausgangsanschluss mit dem vierten Ausgangsanschluss von mindestens zwei zweiten Ladevorrichtungen verbindbar ist, und der vierte Anschluss mit einer zweiten zu ladenden Vorrichtung verbindbar ist, die sich in einem zweiten Ladeparkplatz befindet, der der jeweiligen zweiten Ladevorrichtung entspricht, und wobei die mindestens zwei zweiten Ausgangsanschlüsse mit den dritten Ausgangsanschlüssen von mindestens zwei zweiten Ladevorrichtungen in einer Eins-zu-Eins-Übereinstimmungsart über ein jeweiliges erstes Verbindungsglied verbindbar sind,
wobei die erste Ladevorrichtung ferner ein erstes Steuermodul umfasst und jede zweite Ladevorrichtung ein zweites Steuermodul umfasst,
wobei das zweite Steuermodul dazu konfiguriert ist, erste Anzeigeinformationen zu senden, und die ersten Anzeigeinformationen dazu konfiguriert sind, eine Echtzeit-Ladeleistung der zweiten Ladevorrichtung anzuzeigen; und
das erste Steuermodul ferner dazu konfiguriert ist, die ersten Anzeigeinformationen zu empfangen;
wobei das erste Steuermodul ferner zu Folgendem konfiguriert ist:
Bestimmen, ob das erste Verbindungsglied aktiviert werden soll, basierend auf einer Ladeleistungsanforderung der ersten zu ladenden Vorrichtung und einer Ladeleistung der ersten Ladevorrichtung, wobei, wenn das erste Verbindungsglied aktiviert wird, die erste Ladevorrichtung dazu konfiguriert ist, die erste zu ladende Vorrichtung bei einer ersten gemeinsamen Ladeleistung zu laden, und die erste gemeinsame Ladeleistung eine Echtzeit-Ladeleistung der ersten Ladevorrichtung und der entsprechenden zweiten Ladevorrichtung umfasst;
Auswählen einer oder mehrerer der mehreren zweiten Ladevorrichtungen basierend auf der Echtzeit-Ladeleistung der zweiten Ladevorrichtung; und
Aktivieren des ersten Verbindungsglieds, das jeder ausgewählten zweiten Ladevorrichtung entspricht.

2. Ladesystem nach Anspruch 1, wobei
das erste Steuermodul insbesondere zu Folgendem konfiguriert ist: wenn die Ladeleistungsanforderung der ersten zu ladenden Vorrichtung größer als eine Echtzeit-Ladeleistung der ersten Ladevorrichtung ist, Bestimmen, dass das erste Verbindungsglied aktiviert werden soll; oder
wenn die Ladeleistungsanforderung der ersten zu ladenden Vorrichtung größer als ein Ladeleistungsschwellenwert der ersten Ladevorrichtung ist, Bestimmen, dass das erste Verbindungsglied aktiviert werden soll.

3. Ladesystem nach Anspruch 1 oder 2, wobei jede zweite Ladevorrichtung ein zweites Lademodul umfasst und jedes zweite Steuermodul dazu konfiguriert ist, ein entsprechendes erstes Unterverbindungsglied basierend auf der Echtzeit-Ladeleistung der zweiten Ladevorrichtung auszuwählen, wobei das erste Unterverbindungsglied eine Verbindung zwischen dem zweiten Lademodul und dem dritten Anschluss umfasst.

4. Ladesystem nach einem der Ansprüche 1 bis 3, wobei die erste Ladevorrichtung ein erstes Schaltmodul umfasst und die zweite Ladevorrichtung ein zweites Schaltmodul umfasst, und das erste Steuermodul insbesondere dazu konfiguriert ist, das erste Schaltmodul zu steuern, um eine Verbindung zu aktivieren oder zu deaktivieren, und das zweite Steuermodul insbesondere dazu konfiguriert ist, das zweite Schaltmodul zu steuern, um eine Verbindung zu aktivieren oder zu deaktivieren.

5. Ladeverfahren, wobei das Ladeverfahren durch ein Ladesystem nach einem der Ansprüche 1 bis 4 durchgeführt wird und das Verfahren Folgendes umfasst:
Senden, durch jedes zweite Steuermodul, der ersten Anzeigeinformationen, wobei die ersten Anzeigeinformationen dazu konfiguriert sind, die Echtzeit-Ladeleistung der entsprechenden zweiten Ladevorrichtung anzuzeigen; und
Empfangen, durch das erste Steuermodul, der ersten Anzeigeinformationen;
wobei das Verfahren ferner Folgendes umfasst:
Bestimmen, ob das erste Verbindungsglied aktiviert werden soll, basierend auf einer Ladeleistungsanforderung der ersten zu ladenden Vorrichtung und einer Ladeleistung der ersten Ladevorrichtung, wobei, wenn das erste Verbindungsglied aktiviert wird, die erste zu ladende Vorrichtung bei einer ersten gemeinsamen Ladeleistung geladen wird, und die erste gemeinsame Ladeleistung eine Echtzeit-Ladeleistung der ersten Ladevorrichtung und der entsprechenden zweiten Ladevorrichtung umfasst;
Auswählen einer oder mehrerer der mehreren zweiten Ladevorrichtungen basierend auf der Echtzeit-Ladeleistung der zweiten Ladevorrichtung; und
Aktivieren des ersten Verbindungsglieds, das jeder ausgewählten zweiten Ladevorrichtung entspricht.

6. Verfahren nach Anspruch 5, wobei das Bestimmen, durch das erste Steuermodul basierend auf der Ladeleistungsanforderung der ersten zu ladenden Vorrichtung und der Ladeleistung der ersten Ladevorrichtung, dass das erste Verbindungsglied aktiviert werden soll, Folgendes umfasst:
wenn die Ladeleistungsanforderung der ersten zu ladenden Vorrichtung größer als eine Echtzeit-Ladeleistung der ersten Ladevorrichtung ist, Bestimmen, dass das erste Verbindungsglied aktiviert werden soll; oder
wenn die Ladeleistungsanforderung der ersten zu ladenden Vorrichtung größer als ein Ladeleistungsschwellenwert der ersten Ladevorrichtung ist, Bestimmen, dass das erste Verbindungsglied aktiviert werden soll.

7. Verfahren nach Anspruch 6, wobei jede zweite Ladevorrichtung ein zweites Lademodul umfasst und das Verfahren ferner Folgendes umfasst: Auswählen, durch das zweite Steuermodul, eines entsprechenden ersten Unterverbindungsglieds basierend auf der Echtzeit-Ladeleistung der zweiten Ladevorrichtung, wobei das erste Unterverbindungsglied eine Verbindung zwischen dem zweiten Lademodul und dem dritten Anschluss umfasst.

8. Verfahren nach einem der Ansprüche 5 bis 7, wobei die erste Ladevorrichtung ein erstes Schaltmodul umfasst und die zweite Ladevorrichtung ein zweites Schaltmodul umfasst, und das Verfahren Folgendes umfasst:
Steuern, durch das erste Steuermodul, des ersten Schaltmoduls, um eine Verbindung zu aktivieren oder zu deaktivieren, und Steuern, durch das zweite Steuermodul, des zweiten Schaltmoduls, um eine Verbindung zu aktivieren oder zu deaktivieren.

9. Steuervorrichtung zur Verwendung in einem Ladesystem nach einem der Ansprüche 1 bis 4, die einen Prozessor und einen Speicher umfasst, wobei, wenn ein in dem Speicher gespeicherter Satz von Anweisungen durch den Prozessor ausgeführt wird, die Steuervorrichtung aktiviert wird, um die entsprechenden Schritte nach einem der Ansprüche 5 bis 8 durchzuführen.

10. Computerlesbares Speichermedium, das Anweisungen umfasst, die, wenn sie durch eine Steuervorrichtung nach Anspruch 9 ausgeführt werden, die Steuervorrichtung veranlassen, das Verfahren nach einem der Ansprüche 5 bis 8 durchzuführen.

## Revendications

1. Système de chargement, le système de chargement comprenant au moins un premier appareil de chargement (403) et de multiples deuxièmes appareils de chargement (404, 405),
le premier appareil de chargement comprenant : au moins un premier port de sortie et au moins deux deuxièmes ports de sortie, et chaque deuxième appareil de chargement comprenant au moins un troisième port de sortie et un quatrième port de sortie,
le premier port de sortie pouvant être connecté à un premier appareil à charger situé dans un premier espace de stationnement de chargement correspondant au premier appareil de chargement, le troisième port de sortie pouvant être connecté au quatrième port de sortie d'au moins deux deuxièmes appareils de chargement, et le quatrième port pouvant être connecté à un deuxième appareil à charger situé dans un deuxième espace de stationnement de chargement correspondant au deuxième appareil de chargement respectif, et les au moins deux deuxièmes ports de sortie pouvant être connectés aux troisièmes ports de sortie d'au moins deux deuxièmes appareils de chargement d'une façon en correspondance bi-univoque par l'intermédiaire d'une première liaison respective,
le premier appareil de chargement comprenant en outre un premier module de commande et chaque deuxième appareil de chargement comprenant un deuxième module de commande,
le deuxième module de commande étant configuré pour envoyer des premières informations d'indication, et les premières informations d'indication étant configurées pour indiquer une puissance de chargement en temps réel du deuxième appareil de chargement ; et
le premier module de commande étant en outre configuré pour recevoir les premières informations d'indication ;
le premier module de commande étant en outre configuré pour :
déterminer s'il faut activer la première liaison sur la base d'une exigence de puissance de chargement du premier appareil à charger et d'une puissance de chargement du premier appareil de chargement, dans lequel lorsque la première liaison est activée, le premier appareil de chargement est configuré pour charger le premier appareil à charger à une première puissance de chargement partagée, et la première puissance de chargement partagée comprend une puissance de chargement en temps réel du premier appareil de chargement et du deuxième appareil de chargement correspondant ;
sélectionner un ou plusieurs des multiples deuxièmes appareils de chargement sur la base de la puissance de chargement en temps réel du deuxième appareil de chargement ; et
activer la première liaison correspondant à chaque deuxième appareil de chargement sélectionné.

2. Système de chargement selon la revendication 1, dans lequel
le premier module de commande est spécifiquement configuré pour : lorsque l'exigence de puissance de chargement du premier appareil à charger est supérieure à la puissance de chargement en temps réel du premier appareil de chargement, déterminer d'activer la première liaison ; ou
lorsque l'exigence de puissance de chargement du premier appareil à charger est supérieure à un seuil de puissance de chargement du premier appareil de chargement, déterminer d'activer la première liaison.

3. Système de chargement selon la revendication 1 ou la revendication 2, dans lequel chaque deuxième appareil de chargement comprend un deuxième module de chargement et chaque deuxième module de commande est configuré pour sélectionner une première sous-liaison correspondante sur la base de la puissance de chargement en temps réel du deuxième appareil de chargement, la première sous-liaison comprend une connexion entre le deuxième module de chargement et le troisième port.

4. Système de chargement selon l'une quelconque des revendications 1 à 3, dans lequel le premier appareil de chargement comprend un premier module de commutation et le deuxième appareil de chargement comprend un deuxième module de commutation, et le premier module de commande est spécifiquement configuré pour commander le premier module de commutation pour activer ou désactiver une connexion, et le deuxième module de commande est spécifiquement configuré pour commander le deuxième module de commutation pour activer ou désactiver une connexion.

5. Procédé de chargement, le procédé de chargement étant réalisé par un système de chargement selon l'une quelconque des revendications 1 à 4 et le procédé comprenant :
l'envoi, par chaque deuxième module de commande, des premières informations d'indication, les premières informations d'indication étant configurées pour indiquer la puissance de chargement en temps réel du deuxième appareil de chargement correspondant ; et
la réception, par le premier module de commande, des premières informations d'indication ;
le procédé comprenant en outre :
le fait de déterminer s'il faut activer la première liaison sur la base d'une exigence de puissance de chargement du premier appareil à charger et d'une puissance de chargement du premier appareil de chargement, dans lequel lorsque la première liaison est activée, le premier appareil à charger est chargé à une première puissance de chargement partagée, et la première puissance de chargement partagée comprend une puissance de chargement en temps réel du premier appareil de chargement et du deuxième appareil de chargement correspondant ;
la sélection d'un ou de plusieurs des multiples deuxièmes appareils de chargement sur la base de la puissance de chargement en temps réel du deuxième appareil de chargement ; et
l'activation de la première liaison correspondant à chaque deuxième appareil de chargement sélectionné.

6. Procédé selon la revendication 5, dans lequel le fait de déterminer, par le premier module de commande sur la base de l'exigence de puissance de chargement du premier appareil à charger et de la puissance de chargement du premier appareil de chargement, d'activer la première liaison comprend :
lorsque l'exigence de puissance de chargement du premier appareil à charger est supérieure à la puissance de chargement en temps réel du premier appareil de chargement, le fait de déterminer d'activer la première liaison ; ou
lorsque l'exigence de puissance de chargement du premier appareil à charger est supérieure à un seuil de puissance de chargement du premier appareil de chargement, le fait de déterminer d'activer la première liaison.

7. Procédé selon la revendication 6, dans lequel chaque deuxième appareil de chargement comprend un deuxième module de chargement et le procédé comprend en outre : la sélection, par le deuxième module de commande, d'une première sous-liaison correspondante sur la base de la puissance de chargement en temps réel du deuxième appareil de chargement, la première sous-liaison comprend une connexion entre le deuxième module de chargement et le troisième port.

8. Procédé selon l'une quelconque des revendications 5 à 7, dans lequel le premier appareil de chargement comprend un premier module de commutation et le deuxième appareil de chargement comprend un deuxième module de commutation, et le procédé comprend :
le fait de commander, par le premier module de commande, le premier module de commutation pour activer ou désactiver une connexion, et de commander, par le deuxième module de commande, le deuxième module de commutation pour activer ou désactiver une connexion.

9. Appareil de commande destiné à être utilisé dans un système de chargement selon l'une quelconque des revendications 1 à 4, comprenant un processeur et une mémoire, dans lequel lorsqu'un ensemble d'instructions stockées dans la mémoire est exécuté par le processeur, l'appareil de commande est activé pour réaliser les étapes correspondantes selon l'une quelconque des revendications 5 à 8.

10. Support de stockage lisible par ordinateur, comprenant des instructions qui, lorsqu'elles sont exécutées par un appareil de commande selon la revendication 9, amènent l'appareil de commande à réaliser le procédé selon l'une quelconque des revendications 5 à 8.
